# EUROPEAN PATENT APPLICATION

(11) **EP 2 285 124 A2**
(43) Date of publication of application: **16.02.2011**
(21) Application number: 10172101.7
(22) Date of filing: 06.08.2010
(51) Int. Cl.: H04N 9/76, H04N 5/445

(54) **Video processing apparatus**

(30) Priority: 06.08.2009 JP 2009183000
(71) Applicant: Panasonic Corporation, Kadoma-shi Osaka 571-8501 (JP)
(72) Inventor: Noritake, Toshiya, Osaka-shi, Osaka 540-6207 (JP)
(74) Representative: Grünecker, Kinkeldey, Stockmair & Schwanhäusser Anwaltssozietät

(57) **Abstract**

Even when an OSD video signal is superimposed on a video signal, deterioration in the frequency characteristic or in gradation of the video or OSD video signal superimposed on it is minimized. A graphic image is represented by a video signal that provides color information and degree of transparency information on a pixel basis. The video processor includes: a filtering section, which receives and converts a 4:2:0 format video signal representing the video into a 4:2:2 or 4:4:4 format video signal; a decision section, which determines, by reference to the transparency information, whether the graphic image be superimposed on the video; a synthesizing section, which superimposes a color difference signal representing the graphic image on that of the video signal converted by the filtering section; and a scaling section for performing scaling on the synthetic color difference signal. Depending on the decision result, the filtering and scaling sections change between a mode of processing to retain pixel data and location information of the color difference signal of the 4:2:0 format video signal and another mode of processing to retain not to retain the pixel data and location information.

## Description

### [Technical Field]

The present invention relates to video processing technologies for viewing and listening to, recording and/or playing back a digital broadcast. The present invention also relates to video processing technologies that can be used in a device for playing back a moving picture that has been recorded on a digital storage medium such as a BD or a DVD.

### [Background Art]

When a digital broadcast recorded or a content stored on a BD or a DVD is played back, subtitles, running commentaries, or the like sometimes appears on the screen. In the following description, subtitles will be used as a typical example of those various types of text information. In that case, the video device has generated an output image so that graphics representing the subtitles are superimposed on a video signal.

The video signal representing the digital broadcast received or the content stored on a BD or a DVD may have been subjected to a 4:2:0 sampling and then compressed and encoded compliant with the MPEG standards.

As used herein, the "4:2:0 sampling" refers to a technique for generating color difference signals (including Cb and Cr signals) at a rate that is a half as high as a luminance signal (Y) both horizontally (i.e., along the scan lines) and vertically with respect to the video on the screen. For example, take a matrix consisting of four pixels (i.e., two vertical pixels by two horizontal pixels) as an example. In that case, the luminance signal (Y) is generated for each of the four pixels, while the color difference signal (which may be either the Cb signal or the Cr signal) is generated for only a representative one of the four pixels. A video signal that has been subjected to such 4:2:0 sampling will be also referred to herein as a "4:2:0 format video signal".

The player usually demodulates the compressed video signal, generates graphics data representing the subtitles as an OSD (on screen display) plane video signal (which will be referred to herein as an "OSD video signal"), and then synthesizes together the video signal and the OSD video signal in accordance with their degree of transparency information to carry out rendering. This synthesis process is performed after the video color difference signals are subjected to vertical filtering and transformed into color difference signals (which are signals in either 4:2:2 format or 4:4:4 format) that have the same phase (which will be referred to herein as "vertical phase" or "sampling phase") as the video luminance signal (see patent document 1, for example).

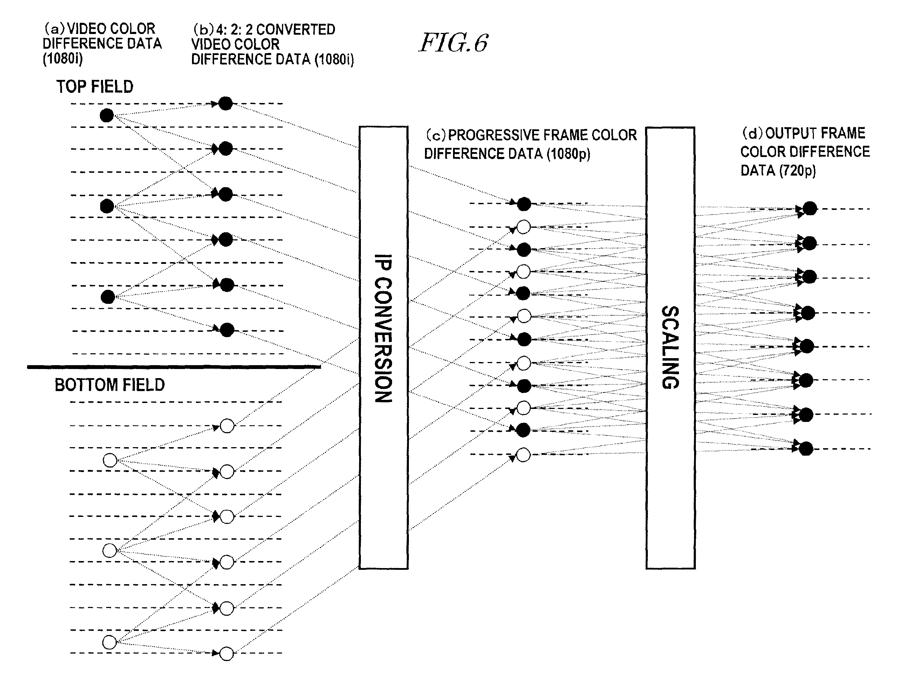

Portions **(a)** through **(d)** of FIG. **6** illustrate an example of conventional video processing to be carried out on a synthesized color difference signal. In this example, interlaced video with 1,080 horizontal scan lines (which will be referred to herein as "1080i video") is transformed into, and output as, progressive video with 720 horizontal scan lines (which will be referred to herein as "720p video"). The 1080i video is supposed to be compliant with the 4:2:0 format. In the following description, however, the luminance signal will be neglected. Also, in the following description, to clearly indicate that the video signal is processed on a pixel-by-pixel basis, each pixel value of the color difference signal will be referred to herein as "color difference data".

Specifically, portion **(a)** of FIG. **6** illustrates top and bottom fields of the 1080i video. In this case, the top field color difference data, which are indicated by the solid circles ●, may form a Cb signal, while the bottom field color difference data, which are indicated by the open circles ○, may form a Cr signal, for example.

Portion **(b)** of FIG. **6** illustrates 4:2:2 format video signals obtained by subjecting the top-field and bottom-field color difference signals shown in portion **(a)** of FIG. **6** to vertical filtering. Each of the arrows that connects one of the color difference data (●) shown in portion **(a)** of FIG. **6** to an associated one of the color difference data (●) shown in portion **(b)** of FIG. **6** indicates on which color difference data shown in portion **(a)** of FIG. **6** the color difference data of each field shown in portion **(b)** of FIG. **6** has been generated. It can be seen that the amount of information of the color difference signal in each field has been doubled as a result of the vertical filtering.

Such vertical filtering is carried out because if the number of pixels of a color difference signal is equalized with that of pixels of a luminance signal, the IP conversion processing can be carried out more easily after that. Portion **(c)** of FIG. **6** illustrates a color difference signal that has been subjected to the IP conversion processing. As a result of the IP conversion processing, the top-field color difference data and the bottom-field color difference data have been integrated together to generate a single frame of color difference data. That is to say, by performing the IP conversion processing, a color difference signal (1080p) representing a progressive frame has been generated. After that, scaling processing (which is also a kind of vertical filtering) is carried out to reduce the number of scan lines to 720.

Portion **(d)** of FIG. **6** illustrates a frame color difference signal (720p) that has been subjected to the scaling processing. Each of the arrows that connects one of the color difference data shown in portion **(c)** of FIG. **6** to its associated ones of the color difference data shown in portion **(d)** of FIG. **6** indicates on which color difference data shown in portion **(c)** of FIG. **6** each scan line color difference data of the frame shown in portion **(d)** of FIG. **6** has been generated.

### [Prior Art Document]

### [Patent Literature]

[Patent Document 1] PCT International Application Japanese National-Phase Laid-Open Patent Publication No. 10-501942

### [Summary of invention]

### [Technical Problem]

According to the conventional video processing technologies, the color difference signals of demodulated video are subjected to the vertical filtering and converted into 4:2:2 signals before subjected to the OSD synthesis. And after the OSD synthesis, the converted color difference signals are once again subjected to vertical filtering as a sort of scaling processing to obtain the intended output resolution. Each of these two different vertical filtering processes involves generating a single piece of color difference data based on multiple pieces of color difference data. That is why every time such a process is carried out, the frequency characteristic of the signal will deteriorate. For that reason, if the filtering is carried out in two stages, the frequency characteristic of a signal will deteriorate more significantly than a situation where the same data is subjected to the filtering only once. Nowadays, the performance of display devices has improved so significantly that such a deterioration in the frequency characteristic of a signal should be easily sensible as a deterioration in image quality (such as a gradation).

It is therefore an object of the present invention to minimize such deterioration in the frequency characteristic and in gradation of a video signal and an OSD video signal superimposed on the video signal.

### [Solution to Problem]

A video processor according to the present invention is designed to superimpose a graphic image on video. A video signal of the graphic image contains color information and degree of transparency information on a pixel-by-pixel basis. The processor includes: a filtering section, which receives a 4:2:0 format video signal representing the video and which converts the video signal into one of a 4:2:2 format video signal and a 4:4:4 format video signal; a decision section, which receives the video signal representing the graphic image and which determines, by reference to the degree of transparency information, whether the graphic image be superimposed on the video or not; a synthesizing section, which superimposes a color difference signal representing the graphic image on a color difference signal of the video signal that has been converted by the filtering section, thereby outputting a synthetic color difference signal; and a scaling section which performs scaling processing on the synthetic color difference signal. Depending on whether or not the decision section has decided that the graphic image be superimposed on the video, the filtering section and the scaling section change between a mode of processing to retain pixel data and location information of the color difference signal of the 4:2:0 format video signal and another mode of processing not to retain the pixel data and location information.

If the decision section has decided that the graphic image not be superimposed on the video, the filtering section may convert the 4:2:0 format video signal into one of the 4:2:2 format video signal and the 4:4:4 format video signal so that the pixel data and the location information of the color difference signal of the 4:2:0 format video signal are retained, and the scaling section may extract the pixel data of the synthetic color difference signal, which has been generated based on the video signal that has been converted by the filtering section, and may perform the scaling processing on the synthetic color difference signal by reference to the location information. If the decision section has decided that the graphic image be superimposed on the video, the filtering section may convert the 4:2:0 format video signal into one of the 4:2:2 format video signal and the 4:4:4 format video signal so that the pixel data and the location information of the color difference signal of the 4:2:0 format video signal are not retained, and the scaling section may perform the scaling processing on the synthetic color difference signal while keeping the synthetic color difference signal in one of the 4:2:2 format and the 4:4:4 format.

If the degree of transparency indicated by the degree of transparency information is equal to or greater than a first predetermined threshold value, the decision section may decide that the graphic image not be superimposed on the video.

If the degree of transparency indicated by the degree of transparency information is less than a first predetermined threshold value and if the difference in color difference between the video and the graphic image is equal to or smaller than a second predetermined threshold value, the decision section may decide that the graphic image not be superimposed on the video.

On the other hand, if the degree of transparency indicated by the degree of transparency information is less than a first predetermined threshold value and if the difference in color difference between the video and the graphic image is greater than a second predetermined threshold value, the decision section may decide that the graphic image be superimposed on the video.

The decision section may determine, by reference to the degree of transparency information on a pixel-by-pixel basis, whether or not the graphic image should be superimposed on the video, and the filtering section and the scaling section may change the modes of processing according to the result of the pixel-by-pixel decision.

The decision section may count the number of pixels, of which the degree of transparency indicated by the degree of transparency information exceeds a third predetermined threshold value, for a prescribed period. If the count is equal to or greater than a fourth threshold value, the decision section may decide that the graphic image not be superimposed on the video. If the count is less than the fourth threshold value, the decision section may decide that the graphic image be superimposed on the video.

### [Advantageous Effect of Invention]

According to the present invention, a video signal on which an OSD image is transparent is directly scaled in the 4:2:0 format, and therefore, sharp video can be obtained with the deterioration in frequency characteristic minimized. Also, the modes of format processing to be performed on a video signal on which an OSD image is superimposed are selectively changed into the 4:2:2 format processing according to the degree of transparency detected. As a result, decrease in the vertical resolution of the OSD image can be much less significant.

### [Brief Description of Drawings]

FIG. **1** is a block diagram illustrating a recorder **100** as a preferred embodiment of the present invention.
FIG. **2** illustrates a detailed arrangement of functional blocks in the video processing section **105.**
FIGS. **3(a)** to **3(c)** illustrate an example of the input/output processing performed by the filtering section **207.**
FIG. **4** is a flowchart showing the procedure of processing to get done by the degree of transparency determining section **211.**
FIG. **5** shows the procedure of the processing to get done by a degree of transparency determining section **211** according to a second preferred embodiment of the present invention.
Portions **(a)** through **(d)** of FIG. **6** illustrate an example of conventional video processing to be carried out on a synthesized color difference signal.

### [Description of Embodiments]

Hereinafter, preferred embodiments of a video processor according to the present invention will be described with reference to the accompanying drawings. In the following description, the video processor of the present invention is supposed to be a recorder that can record a digital broadcast received. The recorder includes a disc drive section, which is used to record a digital broadcast and play back the digital broadcast recorded. The disc drive section may be loaded with a Blu-ray Disc (BD), for example, and can also play back the content stored on the Blu-ray Disc. The present invention does not have to be carried out as a recorder but may also be implemented as a player, a TV set, a cellphone with a TV receiving function, or a PC that performs the processing to be described later.

### (EMBODIMENT 1)

A recorder as a first specific preferred embodiment of the present invention breaks down a 4:2:0 format video signal into a luminance signal and color difference signals and processes them separately. In this case, the recorder changes the methods of processing the color difference signals depending on whether or not an OSD (on screen display) image should be superimposed on the video. Specifically, as for video on which an OSD image needs to be superimposed, the recorder directly scales the color difference signals in the 4:2:0 format and outputs them. As a result, sharp video, of which the frequency characteristic has hardly deteriorated, can be obtained. On the other hand, if an OSD image should be superimposed on the video and if the difference in color difference between the video and the OSD is equal to or greater than a predetermined value, then the recorder converts the color difference signals into the 4:2:2 format and then scales and outputs the converted color difference signals. If processing were carried out in the 4:2:0 format, the color information of an OSD image in the 4:4:4 format would be lost significantly. However, since the color difference signals have already been converted into the 4:2:2 format in this case, the decrease in the vertical resolution of the OSD image can be much less significant.

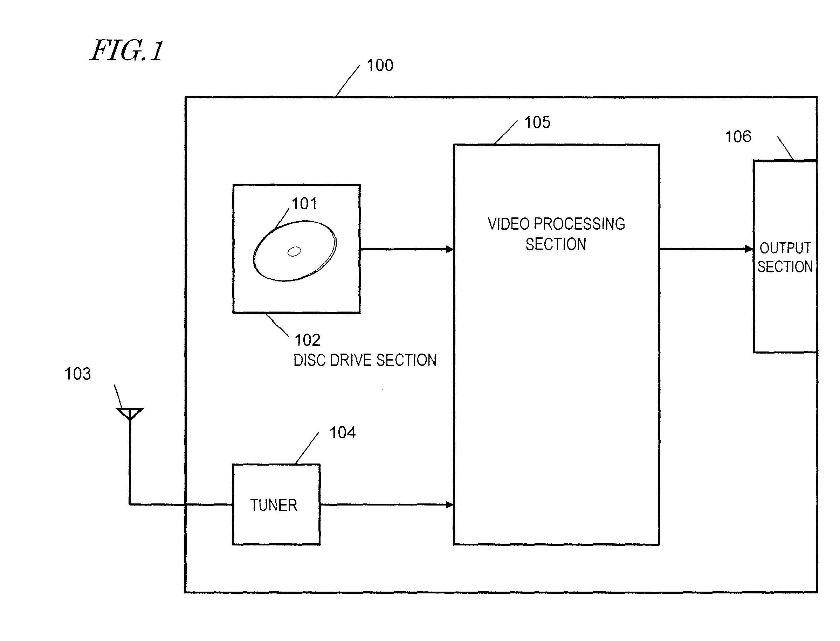

FIG. **1** is a block diagram illustrating a recorder **100** as a first specific preferred embodiment of the present invention.

The recorder **100** includes a disc drive section **102**, an antenna **103**, a tuner **104**, a video processing section **105** and an output section **106.**

The disc drive section **102** retrieves information stored on a disc **101** and outputs a video signal and a digital signal representing graphic data such as subtitles, for example. The disc **101** may be a BD, for example, on which the video signal and the graphic data are stored. It should be noted that the disc **100** is removable from the recorder 100 and does not form part of the recorder **100.**

The antenna **103** receives a broadcast wave. The tuner **104** outputs a digital signal representing the broadcast data included in the broadcast wave that has been received at the antenna **103.** The video processing section **105** selectively demodulates the incoming digital signal and transforms it into a baseband video signal. It is preferred that the video processing section **105** be implemented as a single chip circuit. The output section **106** converts the baseband video signal, which has been supplied from the video processing section **105**, into a signal compliant with the HDMI standard, for example, and then outputs the signal thus obtained.

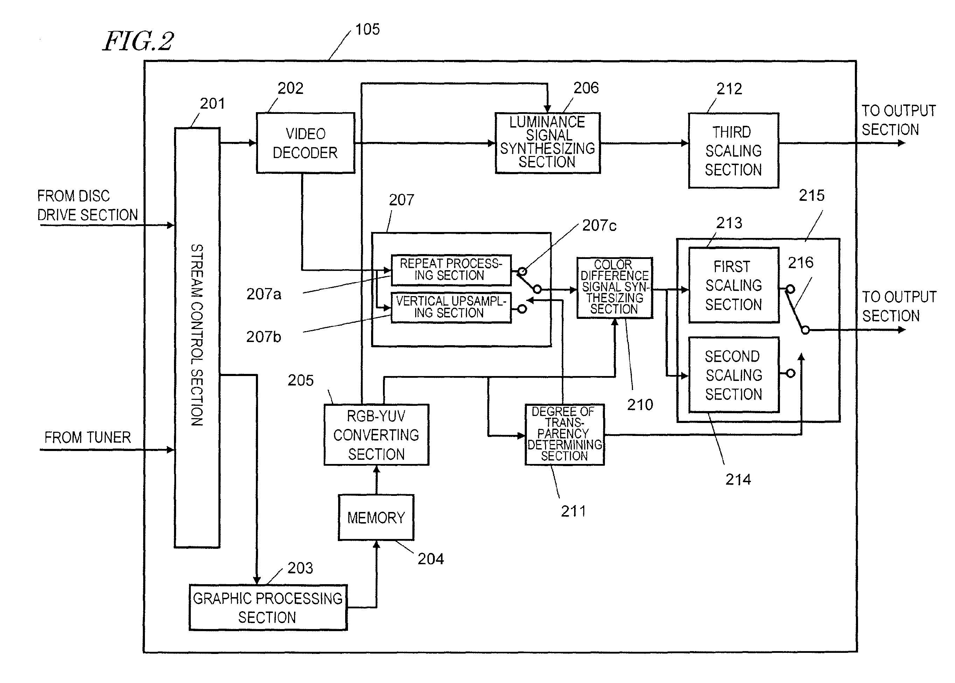

Hereinafter, the video processing section **105** will be described in further detail with reference to FIG. **2****.** In the preferred embodiment to be described below, the video signal supplied to the video processing section **105** is supposed to be a 4:2:0 format video signal. The 4:2:0 format has already been described in detail in the background section of this description, and will not be described all over again.

FIG. **2** illustrates a detailed arrangement of functional blocks in the video processing section **105**, which includes a stream control section **201**, a video decoder **202**, a graphic processing section **203**, a memory **204**, an RGB-YUV converting section **205**, a luminance signal synthesizing section **206**, a filtering section **207**, a color difference signal synthesizing section **210**, a degree of transparency determining section **211**, a third scaling section **212** and a scaling processing section **215.** The stream control section **201** chooses one of the incoming digital signals as a signal to decode. As used herein, "to choose a signal to decode" means choosing either the signal supplied from the disc drive section **102** or the one supplied from the tuner **104.** After that, a video signal corresponding to the chosen signal is output to the video decoder **202.** Meanwhile, the graphic data represented by the chosen signal is output to the graphic processing section **203.**

The video decoder **202** demodulates the video signal and outputs a luminance signal and color difference signals. In this preferred embodiment, the digital signals entered into the video processing section **105** are 4:2:0 format video signals, and therefore, the amount of information (which is represented by either the number of pixels or the size) of the color difference signals (i.e., Cb and Cr signals) to be demodulated is a half as large as that of the luminance signal (i.e., Y signal) both vertically and horizontally. Also, as far as 4:2:0 format video signals are concerned, the color difference signals will be decoded into data in which the location of each pixel has shifted by 0.5 lines with respect to its counterpart of the luminance signal.

The filtering section **207** receives the color difference signals from the video decoder **202** and processes the color difference signals so that their number of vertical pixels agrees with that of the luminance signal. The filtering section **207** includes a repeat processing section **207a** and a vertical upsampling section **207b.**

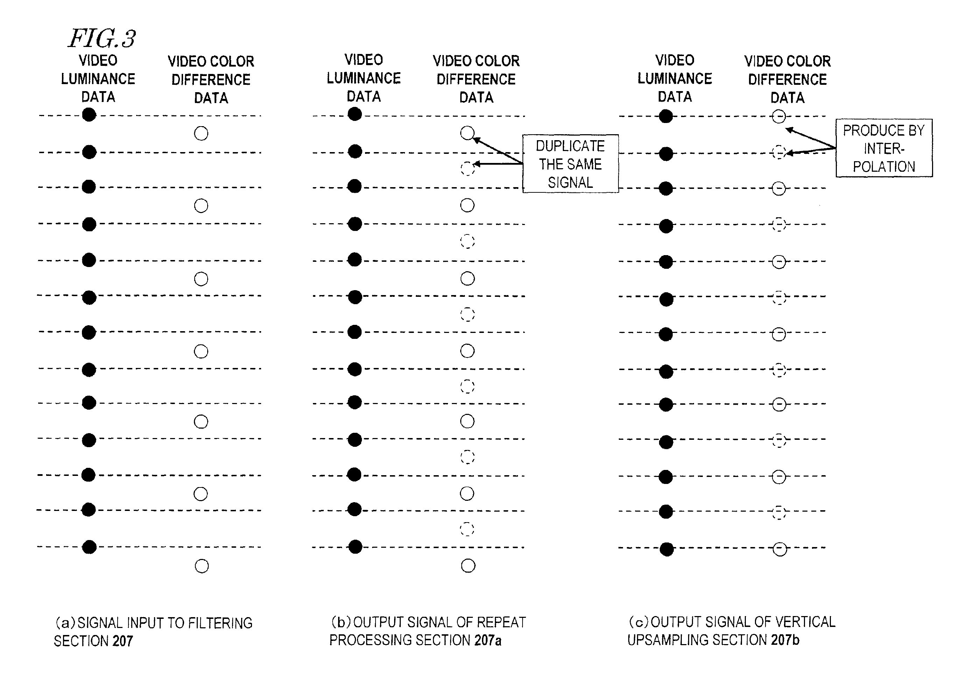

FIGS. **3(a)** to **3(c)** illustrate an example of the input/output processing performed by the filtering section **207.** In FIGS. **3(a)** to **3(c)****,** the horizontal dashed lines indicate the vertical locations of pixels in the video signal, the color difference signals are indicated by the open circles "○" " and the luminance signal is indicated by the solid circles "●".

On the supposition that the digital signals supplied to the video processing section **105** are 4:2:0 format video signals, the filtering section **207** does not have to receive the luminance signal. Were it not for such a supposition, however, the filtering section **207** may receive the luminance signal to adjust the number of vertical pixels in the color difference signals, and may also receive information about the number of vertical pixels in the luminance signal.

FIG. **3(a)** illustrates an example of the color difference signal to be supplied to the filtering section **207.** As shown in FIG. **3(a)****,** in the 4:2:0 format video signal, the color difference signal is decoded into such data, in which the location of each pixel has shifted by 0.5 lines with respect to its counterpart in the luminance signal. The color difference signal is input to the filtering section **207** in such a state.

On receiving such a color difference signal, the filtering section 207 gets the number of vertical pixels of the color difference signal equalized with that of the luminance signal by using either the repeat processing section **207a** or the vertical upsampling section **207b** as will be described later.

For example, the repeat processing section **207a** keeps the values of the input color difference data as they are but duplicates those color difference data values vertically and increase the number of pixels of the color difference signal, thereby equalizing the number of vertical pixels of the color difference signal with that of the luminance signal. FIG. **3(b)** illustrates an exemplary output signal of the repeat processing section **207a**. As shown in FIG. **3(b)****,** a color difference data value for a particular pixel is also used for a vertically adjacent pixel that is located under the particular pixel. In that case, each pixel location in the color difference signal has shifted by 0.5 lines with respect to its associated location in the luminance signal.

However, the vertical upsampling section **207b** not just equalizes the number of vertical pixels of the color difference signal with that of the luminance signal but also performs upsampling filtering, thereby aligning the vertical pixel locations of the color difference signal with their counterparts of the luminance signal. In this case, the "upsampling filtering" means the processing of setting the number of vertical pixels of the color difference signal equal to that of the luminance signal and aligning the locations of vertical pixels of the color difference signal with those of their associated pixels of the luminance signal using an interpolation filter.

These two types of processing shown in FIGS. **3(b)** and **3(c)** are applicable to each of the two color difference signals (i.e., Cb and Cr signals).

The switch **207c** selectively outputs the result of the processing done by either the repeat processing section **207a** or the vertical upsampling section **207b.** This selection is determined by the decision result obtained by the degree of transparency determining section **211.**

If the filtering section **207** has the configuration shown in FIG. **2**, both of the repeat processing section **207a** and the vertical upsampling section **207b** do operate but only one of the two color difference signals is output. Thus, to cut down the power dissipation, the switch **207c** could be arranged between the video decoder **202**, the repeat processing section **207a** and the vertical upsampling section **207b** so that the input signal is selectively supplied to only one of these two circuit sections **207a** and **207b** and that the other circuit section that has not received the color difference signal is not activated.

The graphic processing section **203** receives either script data or compressed graphic data from the stream control section **201.** In accordance with a rendering instruction included in the script data received, the graphic processing section **203** renders a graphic image representing subtitles, for example, in the memory **204** as an OSD plane video signal (which will be referred to herein as an "OSD video signal"). The OSD video signal is represented in the RGB color space. That is to say, the luminance signal (Y) and the Cb and Cr signals all have the same amount of information. And the OSD video signal has degree of transparency information as a piece of additional information.

Each pixel of the OSD video signal may be represented by an α value that provides degree of transparency information and RGB values that provide color information. More specifically, each pixel of the OSD video signal has an α value, a red pixel value, a green pixel value and a blue pixel value. In accordance with the rendering instruction, the α value is stored in the memory **204** and the pixel values representing the three primary colors of RGB are also stored there. In this preferred embodiment, each of the α value and the RGB pixel values is represented by eight bits.

The RGB-YUV converting section **205** converts the RGB values of the OSD video signal, which have been rendered on the memory **204,** into a luminance signal and color difference signals. The luminance signal is supplied, along with the degree of transparency information, from the RGB-YUV converting section **205** to the luminance signal synthesizing section **206.**

Likewise, the color difference signals are also supplied, along with the degree of transparency information, from the RGB-YUV converting section **205** to the color difference signal synthesizing section **210.**

The luminance signal synthesizing section **206** synthesizes together the video signal that has been supplied from the video decoder **202** and the luminance signal that has been supplied from the RGB-YUV converting section **205** in accordance with the degree of transparency information. The synthetic luminance signal thus obtained is scaled by the third scaling section **212** to an output resolution and then output.

On the other hand, the color difference signal synthesizing section **210** synthesizes together the color difference signal that has been supplied from the RGB-YUV converting section **205** and the color difference signal that has been supplied from the filtering section **207.** The synthetic color difference signal thus obtained is scaled by the scaling processing section **215** to an output resolution and then output.

The scaling processing section **215** includes first and second scaling sections **213** and **214** and a switch **216.**

The first scaling section **213** receives the synthetic color difference signal, extracts the original 4:2:0 color difference data from it, and then scales the synthetic color difference signal to an output resolution by reference to the 4:2:0 pixel locations. That is to say, the scaling processing section **215** extracts the group of pixels indicated by the open circles from the video/color difference data shown in FIG. **3(b)** and then performs scaling on them.

On the other hand, the second scaling section **214** receives the synthetic color difference signal and uses every pixel input to scale the synthetic color difference signal to an output resolution by reference to the 4:2:2 pixel locations. That is to say, the scaling processing section **214** performs scaling using both the group of pixels indicated by the open circles and the group of pixels indicated by the dotted circles in the video/color difference data shown in FIG. **3(b)****.**

The switch **216** selectively passes either the output of the first scaling section **213** or that of the second scaling section **214** and is turned according to the decision result obtained by the degree of transparency determining section **211.**

Optionally, just like the switch **207c,** the switch **216** may also be arranged somewhere else. Specifically, the switch **216** could be arranged between the color difference signal synthesizing section **210** and the first and second scaling sections **213** and **214** so that the input signal is selectively supplied to only one of these two circuit sections **213** and **214** and that the other circuit section that has not received the synthetic color difference signal is not activated.

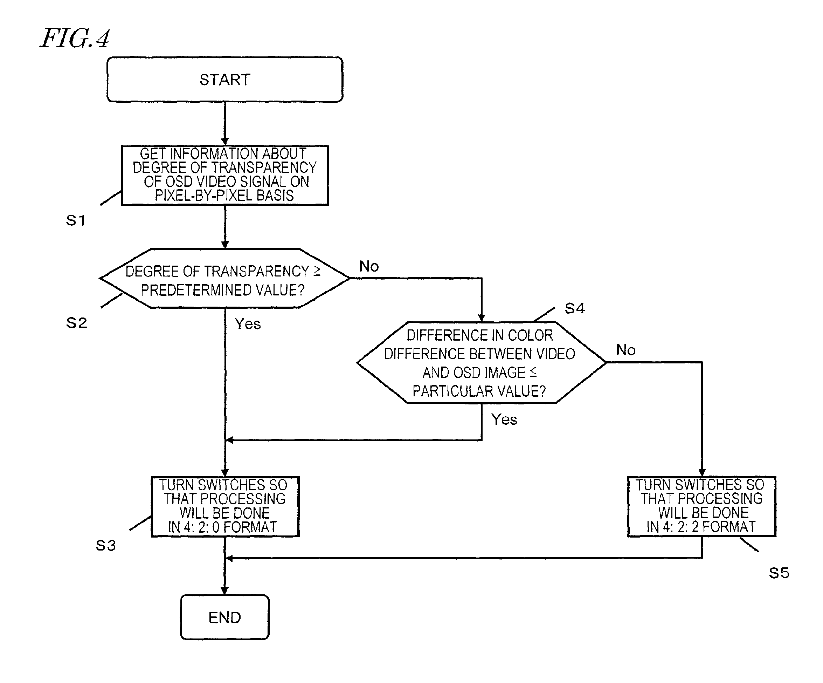

The degree of transparency determining section **211** determines the degree of transparency of the OSD video signal. The degree of transparency thus determined will be described in detail later with reference to FIG. **4****.**

If the degree of transparency determining section **211** has decided that no OSD image be actually superimposed on the video, the switch **207c** is turned to the repeat processing section **207a**. Then, the filtering section **207** outputs a video signal, of which each data value has been duplicated by the repeat processing section **207a**. That video signal still holds not only the pixel data, but also the location information, of the 4:2:0 format color difference components during the video decoding.

Based on its decision result, the degree of transparency determining section **211** turns the switch **216** to the first scaling section **213.** In response, the first scaling section **213** extracts the pixel data of the color difference component of the 4:2:0 format YUV video signal yet to be converted and makes scaling conversion to the output resolution in accordance with its location information.

On the other hand, if the degree of transparency determining section **211** has decided that the OSD image be actually superimposed on the video, then the degree of transparency determining section **211** turns the switch **207c** to the vertical upsampling section **207b.** In that case, the filtering section **207** outputs a video signal that has been processed by the vertical upsampling section **207b,** which has converted the color difference signal that has been decoded by the video decoder **202** into a completely 4:2:2 format color difference signal. The video signal thus obtained does not retain the pixel data of the color difference component of the original 4:2:0 data that was subjected to the video decoding. And the video signal does not retain the location information of the color difference component of the original 4:2:0 data that was subjected to the video decoding.

Also, based on its decision result, the degree of transparency determining section **211** turns the switch **216** to the second scaling section **214.** The second scaling section **214** scales the color difference signal, which has been synthesized by reference to the 4:2:2 format pixel locations, to the output resolution.

FIG. **4** is a flowchart showing the procedure of processing to get done by the degree of transparency determining section **211.**

In Step **S1,** the degree of transparency determining section **211** gets information about the degree of transparency of the OSD video signal on a pixel-by-pixel basis.

In Step **S2**, the degree of transparency determining section **211** compares the pixel-by-pixel degree of transparency of the OSD video signal to a predetermined value. The predetermined value may be 20%, for example. If the degree of transparency is equal to or greater than the predetermined value, the process advances to Step **S3**. If the degree of transparency is less than the predetermined value, the process advances to Step **S4**.

In Step **S3**, the degree of transparency determining section **211** decides that no OSD image be superimposed on the video and turns the switches **207c** and **216** so that the processing will be done in the 4:2:0 format.

On the other hand, in Step **S4**, the degree of transparency determining section **211** determines whether or not the difference in color difference between the video and the OSD image is equal to or smaller than a particular value. If the difference in color difference between the video and the OSD image is equal to or smaller than the particular value, the process advances to Step **S3**. Otherwise, the process advances to Step **S5**.

The reason why the process advances from Step **S4** to Step **S3** is that, when the respective color differences of the OSD image and the video are exactly, or at least nearly, equal to each other, there will be no problem even if it is decided that no OSD image be superimposed on the video, and it is preferred that the latter 4:2:0 format scaling, which would have higher scaling performance, be used. It should be noted that the color differences of the OSD image and the video are exactly equal to each other when subtitles are displayed in white as an OSD image on video representing a black frame in the so-called "cinemascope" representation that displays such a black frame at the top and bottom of the screen. In that case, the OSD image and the video have quite different luminances but the same color difference. However, this processing step **S4** is not indispensable. This is because compared to a conventional method that always requires the conversion into the 4:2:2 format, deterioration in image quality can be reduced by performing the series of processing steps **S2** and **S3.**

On the other hand, if the color of the OSD image is different from that of the video, the processing in the 4:2:0 format would result in a decreased color vertical resolution for the OSD image and deteriorated colors. So, in Step **S5,** the degree of transparency determining section **211** turns the switches **207c** and **216** so that the processing will be carried out in the 4:2:2 format.

In the preferred embodiment described above, the filtering section **207** is supposed to include the repeat processing section **207a** and the vertical upsampling section **207b.** However, this is just an example. Optionally, even if the same filter resource is used, that piece of hardware could still function as the repeat processing section **207a** and the vertical upsampling section **207b** using the software program with the parameters of that filter changed. In that case, the switch 207c would be replaced by the processing step of changing the parameters.

Also, in the preferred embodiment described above, the scaling processing section **215** is supposed to include the first and second scaling sections **213** and **214.** But this is only an example, too. Optionally, even if the same scaler resource is used, that piece of hardware could still function as the first and second scaling sections **213** and **214** using the software program with the parameters of that scaler changed. In that case, the switch **216** would be replaced by the processing step of changing the parameters.

Furthermore, in the preferred embodiment described above, a 4:2:2 format signal is supposed to be input to the scaling processing section **215** at the last stage of the video processing section **105.** This is because the filtering section **207** outputs such a 4:2:2 format signal. However, the filtering section **207** may convert the 4:2:0 format signal into a 4:4:4 format signal and the rest of the processing may be performed on the 4:4:4 format signal after that.

As described above, in the video on which an OSD image is transparent, the color difference signal is directly scaled in the 4:2:0 format, and therefore, sharp video, of which the frequency characteristic hardly deteriorates, can be obtained. Also, once an OSD image has been superimposed on the video, the formats for processing the color difference signal will be changed into the 4:2:2 format according to the degree of transparency determined. This means that a 4:4:4 format OSD video signal is not processed in the 4:2:0 format to be adopted in a situation where the OSD image is transparent. As a result, the decrease in the vertical resolution of the OSD image can be much less significant.

On top of that, there is no need to perform the processing of rounding less significant bits that have been generated as a result of the computations, and therefore, the deterioration in gradation of the color difference signal can be much less significant. As used herein, "to round" means representing the value of a bit sequence by a different bit value (i.e., an approximate value) following a predetermined rule.

More specifically, according to a conventional process, an eight-bit video signal is once expanded to a video signal of a greater number of bits (e.g., ten bits) and then subjected to scaling to round that expanded video signal to a signal of a smaller number of bits (e.g., eight bits). As a result, the precision of gradation will decrease due to such bit rounding.

On the other hand, according to the processing of this preferred embodiment, if an OSD image on the video is transparent, the original eight bit video (in the 4:2:0 format) is directly scaled without being converted into the 4:2:2 format (i.e., without changing the bit numbers), and therefore, there is no need to perform the bit rounding. Consequently, the deterioration in gradation can be minimized.

On top of that, even if an OSD image is superimposed, the decrease in the vertical resolution of the OSD color difference signal can be much less significant.

As described above, the video processor of this preferred embodiment includes: the filtering section 207 that converts a 4:2:0 format YUV video signal into a 4:2:2 or 4:4:4 format YUV video signal; the degree of transparency determining section **211** that determines whether a graphic image should be superimposed on the video or not; the color difference signal synthesizing section **210** that superposes a color difference component representing the graphic image on a color difference component of the video signal that has been converted by the filtering section **207,** thereby outputting a synthetic video signal; and the scaling section **215** for performing scaling processing on the synthetic video signal. If the degree of transparency determining section **211** has decided that the graphic image not be superimposed on the video signal, the filtering section **207** converts the 4:2:0 format YUV video signal into the 4:2:2 or 4:4:4 format YUV video signal so that the pixel data and the location information of the color difference component of the original 4:2:0 format YUV video signal are retained. And the scaling processing section **215** extracts in advance the pixel data of the color difference component of the 4:2:0 format YUV video signal yet to be converted by the filtering section **207** and then performs the scaling processing on the pixel data by reference to the location information. But if the degree of transparency determining section **211** has decided that the graphic image be superimposed on the video signal, the filtering section **207** converts the 4:2:0 format YUV video signal into the 4:2:2 or 4:4:4 format YUV video signal so that neither the pixel data nor the location information of the color difference component of the 4:2:0 format YUV video signal is retained. And the scaling processing section 215 performs the scaling processing on the synthetic video signal while keeping it in the 4:2:2 or 4:4:4 format.

As a result, a video signal on which an OSD image is transparent is directly scaled in the 4:2:0 format, and therefore, sharp video can be obtained with the deterioration in frequency characteristic minimized. Also, the modes of format processing to be performed on a video signal on which an OSD image is superimposed are selectively changed into the 4:2:2 format processing according to the degree of transparency detected. As a result, decrease in the vertical resolution of the OSD image can be much less significant.

Furthermore, it is by reference to the degree of transparency information of a graphic image that the degree of transparency determining section **211** determines whether or not the graphic image should be superimposed on the video signal. As a result, the scaling can be done adaptively according to a variation in the degree of transparency information of the graphic image.

On top of that, the video processor of the present invention determines, on a pixel-by-pixel basis, whether the graphic image should be superimposed on the video signal and changes the modes of processing depending on the result of the decision. Consequently, the scaling can be done adaptively according to a pixel-by-pixel variation in the degree of transparency information of the graphic image.

### (EMBODIMENT 2)

A recorder as a second specific preferred embodiment of the present invention has quite the same configuration as the counterpart **100** of the first preferred embodiment described above. Thus, when the recorder of this second preferred embodiment is described, FIGS. **1** and **2** will be referred to once again. The recorder of the second preferred embodiment has quite the same configuration, and operates in the same way, as its counterpart of the first preferred embodiment except for some minor differences to be described below. Thus, their common features will not be described all over again to avoid redundancies.

In this preferred embodiment, the degree of transparency determining section **211** makes a decision in a different way from the first preferred embodiment described above, which is one of the major differences from the first preferred embodiment.

Hereinafter, the recorder **100** of the second preferred embodiment of the present invention will be described.

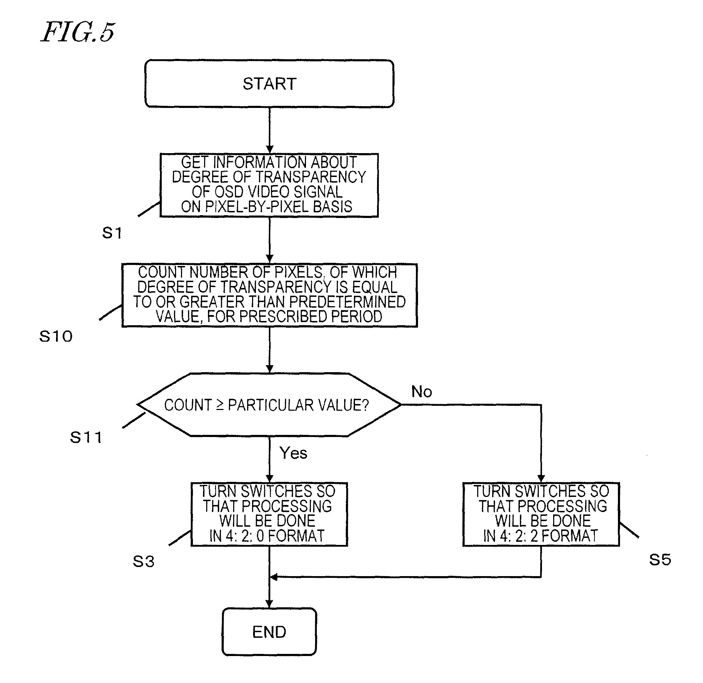

FIG. **5** shows the procedure of the processing to get done by the degree of transparency determining section **211** of this preferred embodiment. In FIG. **5****,** the processing step **S1** shown in FIG. **4** is followed by additional processing steps **S10** and **S11** to replace the processing steps **S2** and **S4,** respectively.

In Step **S10,** the degree of transparency determining section **211** counts the number of pixels, of which the OSD image has a degree of transparency that is equal to or greater than a predetermined value (e.g., 20% or higher), for a prescribed period of time, which may be one frame period (e.g., 1/60 seconds) or two-field periods, for example.

In Step **S11,** the degree of transparency determining section **211** determines whether or not its count is equal to or greater than a particular value. If the count is equal to or greater than a particular value, the determining section **211** decides that no OSD image be superimposed on the video and the process advances to Step **S3.** Note that the particular value may be 99% or more of the total number of pixels included in one frame period, for example

Then, the degree of transparency determining section **211** turns the switches **207c** and **216** so that the processing will be carried out in the 4:2:0 format. On the other hand, if its count is less than that particular value, the degree of transparency determining section **211** decides that an OSD image be superimposed on the video, and the process advances to Step **S5.** In that case, the degree of transparency determining section **211** turns the switches **207c** and **216** so that the processing will be carried out in the 4:2:2 format.

According to this preferred embodiment, this counting processing step needs to be performed. That is why the performance achieved by this preferred embodiment is inferior to that of the first preferred embodiment in terms of real time processing, among other things. However, the configurations of the filtering section **207** and the scaling processing section **215** can be simplified according to this preferred embodiment. As a result, the same resources can be shared more easily, no matter whether the processing is carried out in the 4:2:0 format or in the 4:2:2 format.

Optionally, in this preferred embodiment, the degree of transparency may also be determined on a pixel-by-pixel basis as in Step **S4** shown in FIG. **4****.** Specifically, in that case, the processing step **S4** shown in FIG. **4** may be inserted between the processing steps **S11** and **S5** so that if the color differences of the video and the OSD image are exactly, or at least roughly, equal to each other, then the OSD image is determined to be transparent and the process advances to Step **S3.**

For example, suppose white subtitles are displayed as an OSD image on video representing a black frame. In that case, since an OSD image is superimposed, the formats of processing should be changed into the 4:2:2 format in which the deterioration in the image quality of the OSD image can be reduced. However, if the whole video were processed in the 4:2:2 format, the video would be subjected to filtering in two separate stages and the frequency characteristic of the signal would deteriorate as described above. For that reason, if the color differences of the video and the OSD image are exactly or roughly equal to each other as in a situation where white subtitles are displayed as an OSD image on video representing a black frame, for example, the processing could be carried out in the 4:2:0 format to minimize the deterioration of the video.

Alternatively, when the number of pixels is counted, weights may be added to respective locations on the screen depending on how easily the color difference between the video and the OSD image is sensible to the eye.

The recorder of this preferred embodiment determines whether or not a graphic image will be superimposed on a video signal, adds up the decision results for a predetermined period of time, and then changes the modes of processing according to the sum every time the predetermined period of time passes. As a result, since the modes of scaling change in every predetermined period of time, it is possible to prevent the video from being displayed in a different scaling method from one area to another.

In the preferred embodiments described above, a predetermined value is supposed to be used as a threshold value in the processing steps **S2** and **S4** shown in FIG. **4** and in the processing steps **S10** and **S11** shown in FIG. **5****.** However, this is only an example. Optionally, a different numerical value may be adopted as the threshold value.

Also, in the preferred embodiments described above, the processing shown in the flowcharts of FIGS. **4** and **5** is supposed to be performed mostly by the degree of transparency determining section **211.** In this case, the degree of transparency determining section **211** may be implemented as either a single semiconductor chip or IC (such as a digital signal processor (DSP)) in which the processing shown in those flowcharts has been programmed in advance or a combination of a computer and a piece of software (i.e., a computer program). In that computer program, described are instructions to get the procedures shown in the flowcharts of FIGS. **4** and **5** done. And the computer performs the respective processing steps of the flowcharts shown in FIGS. **4** and **5** by executing the computer program. The computer program may be circulated on the market by being stored on a storage medium such as a CD-ROM or downloaded over telecommunications lines such as the Internet.

Optionally, not just the function of the degree of transparency determining section **211** but also those of the other components can also be performed by either the processor alone or a combination of a computer and software as described above. For example, the video processing section **105** itself could be implemented as a single semiconductor chip.

### [Industrial Applicability]

The present invention can be used effectively in a digital TV set, a digital recorder or any other electronic device that demodulates a 4:2:0 format video signal and displays it with graphic data superimposed on it. And the present invention is beneficial because this invention would contribute greatly to providing as good a playback environment as possible.

### [Reference Signs List]

- **100**: video processor
- **101**: disc
- **102**: disc drive section
- **103**: antenna
- **104**: tuner
- **105**: video processing section
- **106**: output section
- **201**: stream control section
- **202**: video decoder
- **203**: graphic processing section
- **204**: memory
- **205**: RGB-YUV converting section
- **206**: luminance signal synthesizing section
- **207**: filtering section
- **210**: color difference signal synthesizing section
- **211**: degree of transparency determining section
- **212**: third scaling section
- **213**: first scaling section
- **214**: second scaling section
- **215**: scaling processing section
- **216**: switch

## Claims

1. A video processor for superimposing a graphic image on video,
a video signal of the graphic image containing color information and degree of transparency information on a pixel-by-pixel basis, the processor comprising:
a filtering section, which receives a 4:2:0 format video signal representing the video and which converts the video signal into one of a 4:2:2 format video signal and a 4:4:4 format video signal;
a decision section, which receives the video signal representing the graphic image and which determines, by reference to the degree of transparency information, whether the graphic image should be superimposed on the video or not;
a synthesizing section, which superimposes a color difference signal representing the graphic image on a color difference signal of the video signal that has been converted by the filtering section, thereby outputting a synthetic color difference signal; and
a scaling section which performs scaling processing on the synthetic color difference signal,
wherein depending on whether or not the decision section has decided that the graphic image be superimposed on the video, the filtering section and the scaling section change between a mode of processing to retain pixel data and location information of the color difference signal of the 4:2:0 format video signal and another mode of processing to retain not to retain the pixel data and location information.

2. The video processor of claim 1, wherein if the decision section has decided that the graphic image not be superimposed on the video, the filtering section converts the 4:2:0 format video signal into one of the 4:2:2 format video signal and the 4:4:4 format video signal so that the pixel data and the location information of the color difference signal of the 4:2:0 format video signal are retained, and the scaling section extracts the pixel data of the synthetic color difference signal, which has been generated based on the video signal that has been converted by the filtering section, and performs the scaling processing on the synthetic color difference signal by reference to the location information, and
wherein if the decision section has decided that the graphic image be superimposed on the video, the filtering section converts the 4:2:0 format video signal into one of the 4:2:2 format video signal and the 4:4:4 format video signal so that the pixel data and the location information of the color difference signal of the 4:2:0 format video signal are not retained, and the scaling section performs the scaling processing on the synthetic color difference signal while keeping the synthetic color difference signal in the 4:2:2 format or the 4:4:4 format.

3. The video processor of claim 2, wherein if the degree of transparency indicated by the degree of transparency information is equal to or greater than a first predetermined threshold value, the decision section decides that the graphic image not be superimposed on the video.

4. The video processor of claim 2, wherein if the degree of transparency indicated by the degree of transparency information is less than a first predetermined threshold value and if the difference in color difference between the video and the graphic image is equal to or smaller than a second predetermined threshold value, the decision section decides that the graphic image not be superimposed on the video.

5. The video processor of claim 2, wherein if the degree of transparency indicated by the degree of transparency information is less than a first predetermined threshold value and if the difference in color difference between the video and the graphic image is greater than a second predetermined threshold value, the decision section decides that the graphic image be superimposed on the video.

6. The video processor of claim 1, wherein the decision section determines, by reference to the degree of transparency information on a pixel-by-pixel basis, whether or not the graphic image should be superimposed on the video, and
wherein the filtering section and the scaling section change the modes of processing according to the result of the pixel-by-pixel decision.

7. The video processor of claim 1, wherein the decision section counts the number of pixels, of which the degree of transparency indicated by the degree of transparency information exceeds a third predetermined threshold value, for a prescribed period, and
wherein if the count is equal to or greater than a fourth threshold value, the decision section decides that the graphic image not be superimposed on the video, if the count is less than the fourth threshold value, the decision section decides that the graphic image be superimposed on the video.
